# EUROPÄISCHE PATENTSCHRIFT

(11) **EP 0 944 895 B1**
(45) Veröffentlichungstag und Bekanntmachung des Hinweises auf die Patenterteilung: **16.01.2002**
(21) Anmeldenummer: 97953606.7
(22) Anmeldetag: 26.11.1997
(51) Int. Cl.: G08G 1/0968

(54) **VERFAHREN ZUR ÜBERTRAGUNG VON EINE ROUTE EINES FAHRZEUGES IN EINEM VERKEHRSNETZ BETREFFENDEN ROUTENINFORMATIONEN ZWISCHEN EINER VERKEHRSZENTRALE UND EINEM ENDGERÄT IN EINEM FAHRZEUG, EINE VERKEHRSZENTRALE UND EIN ENDGERÄT**
PROCESS FOR TRANSMITTING ROUTE INFORMATION WHICH CONCERNS A ROUTE OF A VEHICLE IN A ROAD NETWORK BETWEEN A TRAFFIC INFORMATION CENTRE AND A TERMINAL IN A VEHICLE, TRAFFIC INFORMATION CENTRE AND TERMINAL
PROCEDE POUR TRANSMETTRE D'UN CENTRAL D'INFORMATIONS ROUTIERES A UN TERMINAL MONTE DANS UN VEHICULE DES INFORMATIONS ROUTIERES QUI DEFINISSENT UN TRAJET D'UN VEHICULE DANS UN RESEAU ROUTIER, CENTRAL D'INFORMATIONS ROUTIERES ET TERMINAL

(30) Priorität: 16.12.1996 DE 19653679; 10.11.1997 DE 19750777
(43) Veröffentlichungstag der Anmeldung: 29.09.1999
(73) Patentinhaber: MANNESMANN Aktiengesellschaft, 40213 Düsseldorf (DE)
(72) Erfinder: MEIS, Josef, D-48147 Münster (DE); PARRA, Andreas, D-22391 Hamburg (DE); STANGIER, Peter, D-50389 Wesseling (DE)
(74) Vertreter: Meissner, Peter E., Dipl.-Ing.
(86) Internationale Anmeldenummer: DE9702818
(87) Internationale Veröffentlichungsnummer: WO9827529

(56) Entgegenhaltungen:
- EP-A- 0 346 491
- EP-A- 0 346 493
- EP-A- 0 380 673
- EP-A- 0 485 120
- EP-A- 0 524 814
- EP-A- 0 588 082
- EP-A- 0 704 675
- EP-A- 0 715 289
- DE-A- 4 035 979

## Beschreibung

Die Erfindung betrifft ein Verfahren zur Übertragung von eine Route eines Fahrzeuges in einem Verkehrsnetz betreffenden Routeninformationen zwischen einer Verkehrszentrale und einem Endgerät in einem Fahrzeug, eine Verkehrszentrale und ein Endgerät.

Eine Verkehrszentrale kann aus von stationären Detektoren in einem Verkehrsnetz gewonnenen und aus von mobilen Detektoren (in Fahrzeugen FCD) gewonnenen und an sie übermittelten Informationen Verkehrszustandsmeldungen, Verkehrsprognosen und Verkehrsnavigationshilfen für ein Endgerät erstellen. Sowohl für die Übertragung von gewonnenen Verkehrsinformationen von einem Fahrzeug (per Mobilfunk etc.) an eine Verkehrszentrale wie auch zur Übertragung von Informationen zu Verkehrszustandsmeldungen, Verkehrsprognosen, Verkehrsnavigationshilfen etc. von einer Zentrale (per. Mobilfunk etc.) an ein Endgerät ist jeweils die Bezeichnung des Ortes, auf welchen sich eine Information bezieht, erforderlich. Wenn im Endgerät und in der Zentrale eine identische Karte vorhanden ist, ist eine Ortsreferenzierung mit Bezug auf die Karte möglich; jedoch werden Karten aufgrund von neuen Straßen, Fahrtrichtungsänderungen, Umleitungen, Baustellen etc. laufend aktualisiert, so daß im Endgerät und in der Zentrale unterschiedliche Kartenversionen vorliegen können. Eine Ortsreferenzierung ausschließlich aufgrund der geographischen Länge und Breite birgt das Problem der erforderlichen Zuordnung zu einer Straße in einer Karte; insbesondere kann z.B. an einer gemessenen Ortsposition eines Endgerätes in der Karte in der Zentrale keine Straße verlaufen, bzw. an einer von einer Verkehrszentrale referenzierten geographischen Ortsposition in der Karte in dem Kartenendgerät keine Straße sein. Die Verwendung gemeinsamer Referenztabellen zu Orten in einem Verkehrsnetz ist im Detaillierungsgrad aufgrund nicht unbegrenzt zur Verfügung stehender Speicherkapazität begrenzt. Derartige Verfahren sind somit zur Übertragung von Informationen im Rahmen eines Navigationsdienstes, welcher insbesondere auch in entlegenen Gebieten zweckmäßig ist, nur bedingt geeignet.

Die EP-A-0 715 289 dersa!ben Anmelderin beschreibt ein Verfahren zur Übertragung von einer Route eines Fahrzeuges in einem Verkehrsnetz definierenden Routeninformationen von einer Verkehrszentrale an ein Endgerät in einem Fahrzeug. Die Routeninformationen werden als Vektorzug von Wegpunkten übertragen und mit einer im Endgerät vorhandenen oder zusätzlich übertragenen digitalen Karte dem Fahrer dargestellt. Die gezielte Übertragung von in Fahrtrichtung liegenden Routeninformationen gemäß der Erfindung wird nicht offenbart.

Die EP 0 588 082 A1 offenbart hingegen ein autarkes fahrzeugseitiges Endgerät, welches ohne Kommunikation mit einer Verkehrszentrale selbst aufgrund einer endgerätseitig vorhandenen digitalen Karte und eines Navigationsrechners Routeninformationen bestimmt, so daß keine Übertragung von Routeninformationen zwischen einer Verkehrszentrale und dem Endgerät erforderlich ist.

Aufgabe der Erfindung ist eine einfache und effiziente Optimierung der Ortsreferenzierung bei der Übertragung von Informationen zwischen einem Endgerät und einer Verkehrszentrale. Die Aufgabe wird durch die Gegenstände der unabhängigen Ansprüche gelöst.

Die Erfindung ermöglicht eine effiziente Ortsreferenzierung auch in entlegenen Gebieten, zu welchen evtl. im Endgerät keine detaillierte Karte und/oder keine Referenztabelle mit Code-Bezeichnungen und ihnen zugeordneten Orten im Verkehrsnetz existiert. Dabei sind die übertragenen, die Route eines Fahrzeuges in einem Verkehrsnetz betreffenden Routeninformationen hinreichend zur Identifikation einer Route eines Fahrzeuges sowohl bei einer Übertragung von Routeninformationen an das Fahrzeug wie auch bei der Übertragung von Routeninformationen an die

Verkehrszentrale. Durch die Bezeichnung der in Fahrtrichtung der Route folgenden Straße und des Ortes eines Wegpunktes wird der Ort einer möglichen Abzweigung eines Fahrzeuges hinreichend definiert; die weitere Fortbewegungsrichtung des Fahrzeuges wird durch die Übermittlung der Fahrtrichtung nach dem Wegpunkt definiert. Ein Wegpunkt wird dabei jeweils dort definiert, wo ein Fahrzeug von einer Straße abgebogen ist oder abbiegen soll.

Nach einer bevorzugten Ausgestaltung der Erfindung geben die übertragenen Routeninformationen eine von der Verkehrszentrale einem Fahrzeug als Navigationshilfe

vorgeschlagene Route an, wobei die Routeninformation von der Verkehrszentrale an das Fahrzeug übertragen werden und wobei Wegpunkte jeweils dort definiert werden, wo von der Verkehrszentrale dem Endgerät im Fahrzeug das Abbiegen des Fahrzeuges vorgeschlagen wird. Damit ist eine effiziente Navigationshilfe für ein Fahrzeug ohne die Notwendigkeit des Vorhandenseins einer detaillierten Karte zu entlegenen Gebieten, zu Auslands-Gebieten etc. oder von Ortsreferenztabellen im Endgerät im Fahrzeug möglich.

Nach einer weiteren Ausgestaltung der Erfindung beschreibt die Routeninforrnation eine von einem Fahrzeug zurückgelegte Route, über welche das Fahrzeug die Erstellung von Verkehrszustandsmeldungen oder Verkehrsprognosen) informieren soll; dabei werden die Routeninformationen vom Endgerät im Fahrzeug an die Verkehrszentrale übertragen. Wegpunkte werden dort definiert, wo das Fahrzeug von einer Straße abgebogen ist. Bei Verwendung dieser Ausgestaltung als Navigationshilfe kann ein vom Fahrzeugendgerät an die Verkehrszentrale zur Interaktivität bzw. zur Kontrolle des gefahrenen Weges eines navigierten Fahrzeuges der Name und evtl. die Fahrtrichtung im Endgerät vom Benutzer zur manuellen oder akustischen Eingabe abgefragt werden. Die Richtung kann dabei auch aufgrund laufender GPS-Messungen bestimmt werden. Bei Verwendung dieser Ausgestaltung zur Information der Verkehrszentrale über einen vom Fahrzeug zurückgelegten Weg zur Erstellung von Verkehrszustandsmeldungen oder Verkehrsprognosen ist eine automatische Erfassung der Routeninformationen im Endgerät, insbesondere eine Erfassung der Namen der zurückgelegten Straßen, der Orte von Wegpunkten und der Fahrtrichtung zweckmäßig; bei einer Positionsbestimmung (z.B. aus GPS) können Straßennamen, Orte von Abzweigungs-Wegpunkten z.B. aus einer Karte im Endgerät und Fahrtrichtungen automatisch ermittelt und als Routeninformationen an die Verkehrszentrale übermittelt werden.

In der Zentrale ist zweckmäßig eine digitale Karte des Verkehrsnetzes vorhanden.

Eine einem Endgerät in einem Fahrzeug von der Zentrale empfohlene Route im Verkehrsnetz wird in der Zentrale z.B. von einem Routenberechnungsprogramm berechnet; dabei kann eine digitale Karte und/oder Verkehrsinformationen etc. mit einbezogen werden.

Die Kommunikation zwischen einer Verkehrszentrale und einem Fahrzeug erfolgt zweckmäßig per Funk, insbesondere Mobilfunk. Die Angabe der Fahrtrichtung nach einem Wegpunkt kann in den Routeninformationen insbesondere als Himmelsrichtung und/oder als Abzweigerichtung (also links/rechts/geradeaus/scharf links etc.) angegeben und übertragen werden.

Das erfindungsgemäße Verfahren kann in einer Verkehrszentrale und in einem Endgerät als Programm implementiert sein.

Weitere Merkmale und Vorteile der Erfindung ergeben sich aus der nachfolgenden Beschreibung eines Ausführungsbeispiels anhand der Zeichnung. Dabei zeigt:
- Fig. 1: einen Ausschnitt aus einem Verkehrsnetz und
- Fig. 2: eine abstrahierte Darstellung des in Fig. 1 gezeigten Ausschnittes des Verkehrsnetzes.

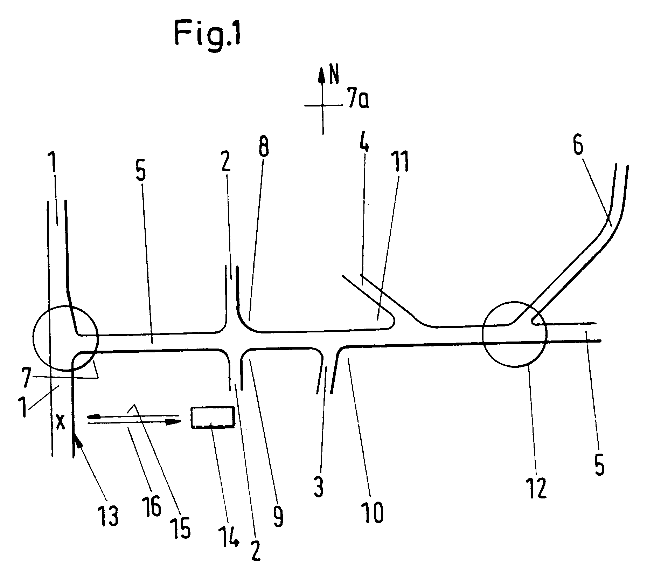

Das in Fig. 1 ausschnittweise dargestellte Verkehrsnetz zeigt die Straßen; 1 = Kölner Straße, 2 = Verdi-Straße, 3 = Mozart-Straße, 4 = Hinterer Waldweg, 5 = Beethoven-Straße, 6 = Bachstraße. Femer ist hierzu ein Kompaß 7a dargestellt, der angibt, daß in Fig. 1 oben die Himmelsrichtung Norden im Verkehrsnetz 1 bis 6 ist. Vom Süden auf der Kölner Straße 1 kommend besteht die Abbiegemöglichkeit 7 nach rechts in die Beethoven-Straße 5. Beim Befahren der Beethoven-Straße 5, ausgehend von der Abbiegemöglichkeit 7 von der Kölner Landstraße in Richtung Osten, also in Fig. 1 nach rechts, bestehen nach links die Abbiegemöglichkeiten 8 in die Verdi-Straße 2, 11 in den Hinteren Waldweg 4, 12 in die Bachstraße 6 und nach rechts die Abbiegemöglichkeiten 9 in die Verdi-Straße, 2 und 10 in die Mozart-Straße 3.

Das Fahrzeug 13 bewegt sich auf der Kölner Straße 1 in Richtung Norden, also in Fig. 1 von unten nach oben auf die Abbiegemöglichkeit 7 zu.

Mit dem erfindungsgemäßen Verfahren können Routeninformationen zu einer von einem Fahrzeug 13 mit einem Endgerät innerhalb eines Verkehrsnetzes 1 bis 6 zurückgelegten Route an eine Verkehrszentrale 14 (per Mobilfunk etc.) z.B. zur Navigationskontrolle übertragen 16 werden. Femer können mit dem erfindungsgemäßen Verfahren von einer Verkehrszentrale sich auf eine Route beziehende Informationen, insbesondere Navigationshilfeinformationen an ein Endgerät in einem Fahrzeug 13 übertragen 15 (per Mobilfunk etc.) werden.

Im folgenden wird zunächst die Übertragung von Routeninformationen zu einer von einem Fahrzeug in einem Verkehrsnetz zurückgelegten Route beschrieben: Ein Fahrzeug 13 fährt in Fig. 1 entlang der Kölner Straße 1, zweigt an der Abbiegemöglichkeit 7 nach Osten, also in Fig. 1 nach rechts in die Beethoven-Straße 6 ab und fährt diese bis zur Abbiegemöglichkeit 12 entlang, worauf es an der Abbiegemöglichkeit 12 nach Nordosten, also in Fig. 1 nach rechts oben, in die Bachstraße 6 abbiegt. Diese Route des Fahrzeuges 13 soll von einem Endgerät im Fahrzeug 13 an die Verkehrszentrale zum Ermöglichen einer interaktiven Navigation oder/und zur Weiterverwendung in der Verkehrszentrale 14 an die Verkehrszentrale 14 übertragen 16 werden. Einen Anfangspunkt einer Route überträgt ein Endgerät in einem Fahrzeug 13 beispielsweise aufgrund seiner Position, welche beispielsweise durch GPS im Endgerät ermittelbar ist. Die Route des Fahrzeuges 13 an die Verkehrszentrale kann derart übermittelt werden 16, daß Wegpunkte im Endgerät des Fahrzeugs 13 dort definiert werden, wo das Fahrzeug von einer Straße abbiegt. Hier wird ein Wegpunkt 7 dort definiert, wo das Fahrzeug von der Kölner Straße 1 in die Beethoven-Straße 5 abbiegt; ein weiterer Wegpunkt 12 wird dort definiert, wo das Fahrzeug von der Beethoven-Straße 5 in die Bachstraße 6 abbiegt. Zu diesen Wegpunkten werden jeweils die in Fahrtrichtung der Route folgende Straße, der Ort des Wegpunktes und die Fahrtrichtung nach dem Wegepunkt bezeichnet und übertragen. Am Wegpunkt 7 wird die in Fahrtrichtung der Route folgende Straße 5, also die Beethoven-Straße 5 bezeichnet; femer wird der Ort des Wegpunktes bezeichnet, welcher beispielsweise durch GPS ermittelbar ist; ferner wird die Fahrtrichtung nach dem Wegpunkt 7 als "rechts" oder/und "Osten" bezeichnet. Entsprechend wird in den Routeninformationen zu dem Wegpunkt 12 die in Fahrtrichtung der Route nach dem Wegpunkt 12 folgende Straße, die Bachstraße 6, sowie der Ort des Wegpunktes 12, sowie die Fahrtrichtung nach dem Wegpunkt 12, also hier nach rechts oben und/oder nach Nordosten, bezeichnet. Der Ort eines Wegpunktes kann in Form von standardisierten geographischen Koordinaten, beispielsweise durch eine Zahl, welche geographische Länge und Breite mit vorgegebener Rundung angibt, übertragen werden etc. Die Ermittlung der. Straßen, in welche ein Fahrzeug einbiegt, kann aufgrund von GPS und/oder Lenkradeinschlag mit einer digitalen Karte im Endgerät im Fahrzeug 13 erfolgen; femer ist ein einfacheres Endgerät für ein Fahrzeug 13 möglich, wobei beispielsweise zum Ermöglichen einer interaktiven Navigation, eine Eingabe zu einer Abzweigung 7, 12 in eine andere Straße vom Endgerät manuell und/oder akustisch vom Benutzer angenommen wird.

Zu denjenigen Abbiegemöglichkeiten 8, 9, 10, 11 von einer Straße 5, welche das Fahrzeug 13 nicht wahrnimmt, werden hier keine Routendaten übertragen.

Aufgrund der übertragenen 16 Routendaten ist eine Erkennung des Weges des Fahrzeuges 13 in der Verkehrszentrale 14 möglich. Zweckmäßig weist die Verkehrszentrale eine digitale Karte des Verkehrsnetzes 1 bis 6 auf. Der ermittelte Weg des Fahrzeuges 13 kann damit Straßen in der digitalen Karte in der Verkehrszentrale 14 zugeordnet werden. Aufgrund der Zuordnung kann eine Navigation des Fahrzeuges interaktiv gestaltet werden und/oder eine historische Datenbank für Verkehrsinformationen etc. angelegt und verwendet werden.

Im folgenden wird die Übertragung von einer Route eines Fahrzeuges in einem Verkehrsnetz betreffenden Routeninformationen von der Verkehrszentrale 14 an ein Endgerät in einem Fahrzeug 13 erläutert werden. Beispielsweise übermittelt 15 die Verkehrszentrale 14 Routeninformationen an ein Endgerät im Fahrzeug 13 als Navigationshilfe für das Fahrzeug 13.

Eine derartige Navigationshilfe kann vom Fahrzeug 13, insbesondere unter Angabe seiner Anfangsposition und seiner gewünschten Zielposition, bei der Verkehrszentrale 14 (per Mobilfunk etc.) angefordert werden. Die Verkehrszentrale 14 ermittelt mit einem Routenberechnungsprogramm eine optimale Route für das Fahrzeug 13; dabei können Verkehrszentrale 14 bekannte Staus, Umleitungen, Unfälle, Entfernungen in einer digitalen Karte, Längen unterschiedlicher Routen etc. berücksichtigt werden. Die Verkehrszentrale 14 überträgt an ein Fahrzeug 13 zunächst die Richtung, in welche es losfahren soll. Zu einem möglichen Abbiegepunkt 7 bis 12 überträgt die Verkehrszentrale 14 hier nur dann Routeninformationen, wenn das Fahrzeug 13 von einer Straße abbiegen soll. Es werden also Routeninformationen zu den Abbiegemöglichkeiten 7, 12 übertragen; zu den Abbiegemöglichkeiten 8, 9, 10, 11 werden keine Routeninformationen übertragen. Diejenigen Abbiegemöglichkeiten 7, 12, an welchen ein Fahrzeug 13 von einer Straße 1 bzw. 5 in eine andere Straße abzweigen soll, werden in der Verkehrszentrale 14 als Wegpunkte definiert, zu denen Routeninformationen übertragen werden sollen. Zum Wegpunkt 7 überträgt die Verkehrszentrale 14 an ein Endgerät im Fahrzeug 13 die in Fahrtrichtung der empfohlenen Route nach dem Wegpunkt 7 folgende Straße, die Beethoven-Straße 5, sowie den Ort des Wegpunktes, sowie die Fahrtrichtung, welche das Fahrzeug nach dem Wegpunkt 7 verfolgen soll. Die Straße wird dabei, insbesondere wenn im Endgerät keine digitale Karte vorliegt, als "Beethoven-Straße" übertragen. Der Ort des Wegpunktes 7 kann, wenn die Verkehrszentrale 14 den Ort des Wegpunktes 7 und den aktuellen Ort des Fahrzeuges 13 (beispielsweis aus einer GPS-Messung im Fahrzeug 13 und Übermittlung des Ortes an die Verkehrszentrale 14) kann in Form einer Distanz (3 km) übermittelt werden; femer ist eine Übermittlung des absoluten geographischen Positionsortes des Wegpunktes 7 in Form seiner geographischen, standardisiert gerundeten Koordinaten oder in anderer Weise möglich. Die Fahrtrichtung, welche das Fahrzeug 13 nach dem Wegpunkt 7 verfolgen soll, kann als auf die bisherige Fahrtrichtung des Fahrzeugs bezogene Relativrichtung angegeben werden, also insbesondere als links, rechts, scharf links, geringfügig links etc.; femer kann die Fahrtrichtung als Himmelsrichtung, also Nord, Süd, Ost, West, oder bei genauerer Auflösung Nord, Nordwest, West, Südwest, Süd, Südost, Ost, Nordost angegeben werden, wobei dies insbesondere beim Vorhandensein eines Kompasses und/oder eines Positionserfassungssystems (wie GPS) im Fahrzeug 13 sinnvoll ist. Entsprechend wird dem Fahrzeug beim Wegpunkt 12 als Routeninformation übermittelt, daß es in die "Bachstraße" einbiegen soll, welche Position der Wegpunkt 12 hat, und in welche Richtung es in die Bachstraße einbiegen soll.

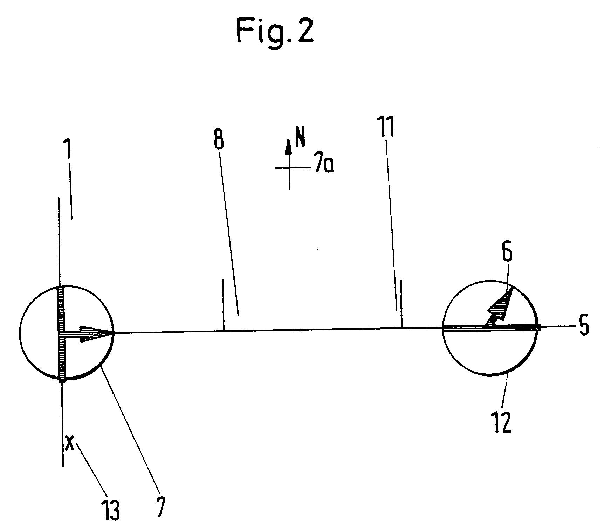

Fig. 2 zeigt schematisch abstrahiert die Teil-Route eines Fahrzeuges im in Fig. 1 gezeigten Ausschnitt des Verkehrsnetzes. Eine derartige Darstellung ist auch auf einem Display im Endgerät im Fahrzeug 13 zur Information eines Fahrers möglich. Femer können auf einem Display im Endgerät im Fahrzeug 13 auch nur Informationen zum nächsten Wegpunkt, also beispielsweise der in Fig. 2 linke Kreis mit den darin enthaltenen Details, angezeigt werden. Der nächste Wegpunkt kann dabei wie in Fig. 2 dargestellt so dargestellt werden, daß in einem Display im Endgerät im Fahrzeug 13 oben Norden ist, oder derart, daß die Fahrtrichtung des Fahrzeuges 13 auf einem Display nach oben verläuft. Entsprechend kann vor dem Wegpunkt 12 die in Fig. 2 rechts dargestellte (im Kreis) Information zum Wegpunkt 12 dargestellt werden. Femer können die Informationen auch akustisch einem Benutzer zur Verfügung gestellt werden.

## Patentansprüche

1. Verfahren zur Übertragung (15, 16) von eine Route eines Fahrzeugs (13) in einem Verkehrsnetz (1 bis 6) vollständig definierenden Routeninformationen zwischen einer Verkehrszentrale (14) und einem Endgerät in einem Fahrzeug,
- wobei die Übertragung der Routeninformationen vom Endgerät an die Zentrale oder von der Zentrale an das Endgerät erfolgt,
- wobei die Routeninformationen auf der Route liegende Wegpunkte (7; 12) betreffen,
**dadurch gekennzeichnet, daß**
- ein Wegpunkt jeweils am Ort des empfohlenen oder erfolgten Abbiegens des Fahrzeuges von einer Straße (1; 5) definiert wird, und eine Routeninformation zu einem Wegpunkt
den Ort des Wegpunktes,
die in Fahrtrichtung der Route folgende Straße,
und die Fahrtrichtung nach dem Wegpunkt enthält.

2. Verfahren nach Anspruch 1,
**dadurch gekennzeichnet,**
**daß** die Routeninformationen eine von der Verkehrszentrale (14) einem Fahrzeug als Navigationshilfe vorgeschlagene Route angeben, daß die Routeninformationen von der Verkehrszentrale (14) an das Fahrzeug (13) übertragen (15) werden, und daß Wegpunkte (7; 12) jeweils dort definiert werden, wo das Abbiegen des Fahrzeuges (13) von einer Straße (1; 5) vorgeschlagen wird.

3. Verfahren nach einem der vorhergehenden Ansprüche,
**dadurch gekennzeichnet,**
**daß** die Routeninformationen eine von einem Fahrzeug zurückgelegte Route beschreiben, daß die Routeninformationen von einem Endgerät im Fahrzeug (13) an die Verkehrszentrale (14) übertragen werden, und daß Wegpunkte (7; 12) dort definiert werden, wo das Fahrzeug (13) von einer Straße abgebogen ist.

4. Verfahren nach einem der vorhergehenden Ansprüche,
**dadurch gekennzeichnet,**
**daß** in der Zentrale (14) eine digitale Karte des Verkehrsnetzes (1 bis 6, 7 bis 12) verwendet wird.

5. Verfahren nach einem der vorhergehenden Ansprüche,
**dadurch gekennzeichnet,**
**daß** in der Zentrale ein Routenberechnungsprogramm zur Berechnung einer Route für ein Fahrzeug verwendet wird.

6. Verfahren nach einem der vorhergehenden Ansprüche,
**dadurch gekennzeichnet,**
**daß** eine in einem Endgerät gespeicherte digitale Karte des Verkehrsnetzes zur Bestimmung einer vom Fahrzeug gefahrenen Route verwendet wird.

7. Verfahren nach einem der vorhergehenden Ansprüche,
**dadurch gekennzeichnet,**
**daß** sich die digitale Karte im Endgerät und die digitale Karte in der Zentrale unterscheiden.

8. Verfahren nach einem der vorhergehenden Ansprüche,
**dadurch gekennzeichnet,**
**daß** die Übertragung (15, 16) per Funk, insbesondere Mobilfunk erfolgt.

9. Verfahren nach einem der vorhergehenden Ansprüche,
**dadurch gekennzeichnet,**
**daß** ein Endgerät (13) von der Verkehrszentrale (14) einen Routenvorschlag anfordert unter Angabe der aktuellen Endgerätsposition und der gewünschten Zielposition.

10. Verfahren nach einem der vorhergehenden Ansprüche,
**dadurch gekennzeichnet,**
**daß** die Fahrtrichtung als Himmelsrichtung (Nord, Süd, West, Ost, Nordwest usw.) angegeben wird.

11. Verfahren nach einem der vorhergehenden Ansprüche,
**dadurch gekennzeichnet,**
**daß** die Fahrtrichtung durch die Kreuzungsgeometrie angegeben wird.

12. Verfahren nach einem der vorhergehenden Ansprüche,
**dadurch gekennzeichnet,**
**daß** die in Fahrtrichtung der Route nach dem Wegpunkt (11; 12) liegende Straße (5; 6) mit ihrem Namen (Beethoven-Straße; Bachstraße) angegeben wird.

13. Verwendung des Verfahren nach einem der vorhergehenden Ansprüche,
in Gebieten, zu welchen ein Endgerät keine digitale Karte oder keine hinreichend detaillierte digitale Karte besitzt, insbesondere in entlegenen Gebieten.

14. Verkehrszentrale mit einem Speicher, mit einem im Speicher gespeicherten Programm zur Durchführung aller Merkmale des Verfahrens nach einem der vorhergehenden Ansprüche, mit einem Prozessor zum Abarbeiten des Programms, mit einer Kommunikationseinrichtung zum Übertragen (15) von Routeninformationen an ein Endgerät und/oder zum Empfangen (16) von Routeninformationen von einem Endgerät.

15. Endgerät mit einem Speicher, mit einem im Speicher abgelegten Programm zur Durchführung aller Merkmale des Verfahrens nach einem der Ansprüche 1 bis 13, mit einem Prozessor zum Abarbeiten des Programms, mit einer Kommunikationseinrichtung zum Empfangen (15) oder Absenden (16) von Routeninformationen.

16. Endgerät nach Anspruch 15,
**dadurch gekennzeichnet,**
**daß** es eine akustische und/optische Benutzerschnittstelle aufweist.

17. Endgerät nach Anspruch 15 oder 16,
**dadurch gekennzeichnet,**
**daß** das Endgerät einen Kompaß und/oder einen Dateneingang für Daten von einem Kompaß aufweist.

## Claims

1. Process for transmitting (15, 16) route information completely defining a route of a vehicle (13) in a traffic network (1 to 6) between a traffic control centre (14) and a terminal in a vehicle,
- wherein the route information is transmitted from the terminal to the control centre or from the control centre to the terminal,
- wherein the route information relates to route points (7; 12) lying along the route,
**characterised in that**
- a route point is in each case defined at the location of the recommended or executed turn-off of the vehicle from a road (1; 5),
and an item of route information relating to a route point comprises
the location of the route point,
the road following in the direction of travel of the route,
and the direction of travel after the route point.

2. Process according to Claim 1,
**characterised in**
**that** the route information indicates a route suggested to a vehicle as a navigation aid by the traffic control centre (14), that the route information is transmitted from the traffic control centre (14) to the vehicle (13), and that route points (7; 12) are in each case defined where it is suggested that the vehicle (13) turn off a road (1; 5).

3. Process according to any one of the preceding Claims,
**characterised in**
**that** the route information describes a route covered by a vehicle, that the route information is transmitted from a terminal in the vehicle (13) to the traffic control centre (14), and that route points (7; 12) are defined where the vehicle (13) has turned off a road.

4. Process according to any one of the preceding Claims,
**characterised in**
**that** a digital map of the traffic network (1 to 6, 7 to 12) is used in the control centre (14).

5. Process according to any one of the preceding Claims,
**characterised in**
**that** a route calculation program is used in the control centre to calculate a route for a vehicle.

6. Process according to any one of the preceding Claims,
**characterised in**
**that** a digital map, which is stored in a terminal, of the traffic network is used to determine a route travelled by the vehicle.

7. Process according to any one of the preceding Claims,
**characterised in**
**that** the digital map in the terminal and the digital map in the control centre differ from one another.

8. Process according to any one of the preceding Claims,
**characterised in**
**that** the transmission (15, 16) takes place by radio, in particular mobile radio.

9. Process according to any one of the preceding Claims,
**characterised in**
**that** a terminal (13) requests a route suggestion from the traffic control centre (14), indicating the actual terminal position and the desired destination.

10. Process according to any one of the preceding Claims,
**characterised in**
**that** the direction of travel is given as a cardinal point (north, south, west, east, northwest, etc.).

11. Process according to any one of the preceding Claims,
**characterised in**
**that** the direction of travel is indicated by the intersection geometry.

12. Process according to any one of the preceding Claims,
**characterised in**
**that** the road (5; 6) lying after the route point (11; 12) in the direction of travel of the route is indicated by its name (Beethoven-Straße; Bachstraße).

13. Use of the process according to any one of the preceding Claims in districts for which a terminal does not have a digital map or a sufficiently detailed digital map, in particular in remote districts.

14. Traffic control centre with a memory, with a program stored in the memory for carrying out all the features of the process according to any one of the preceding Claims, with a processor for processing the program, with a communication device for transmitting (15) route information to a terminal and/or for receiving (16) route information from a terminal.

15. Terminal with a memory, with a program stored in the memory for carrying out all the features of the process according to any one of Claims 1 to 13, with a processor for processing the program, with a communication device for receiving (15) or sending (16) route information.

16. Terminal according to Claim 15,
**characterised in**
**that** it comprises an acoustic and/or optical user interface.

17. Terminal according to Claim 15 or 16,
**characterised in**
**that** the terminal comprises a compass and/or a data input for data of a compass.

## Revendications

1. Procédé pour transmettre (15, 16) des informations d'itinéraire, définissant totalement un itinéraire d'un véhicule (13) dans un réseau routier (1 à 6), entre une centrale de trafic (14) et un terminal dans un véhicule, la transmission des informations d'itinéraire étant effectuée du terminal à la centrale ou de la centrale au terminal, et les informations d'itinéraire concernant des points de trajet (7 ; 12) se trouvant sur l'itinéraire,
**caractérisé en ce qu'**un point de trajet est défini, à chaque fois, au lieu de la déviation recommandée ou effectuée du véhicule d'une voie routière (1 ; 5), et une information d'itinéraire en un point de trajet contient le lieu du point de trajet, la voie routière suivante dans la direction de marche de l'itinéraire et la direction de marche après le point de trajet.

2. Procédé selon la revendication 1,
**caractérisé en ce que** les informations d'itinéraire fournissent un itinéraire proposé par la centrale de trafic (14) à un véhicule, comme aide à la navigation, **en ce que** les informations d'itinéraire sont transmises (15) de la centrale de trafic (14) au véhicule (13), et **en ce que** des points de trajet (7 ; 12) sont à chaque fois définis là où la déviation du véhicule (13) d'une voie routière (1 ; 5) est proposée.

3. Procédé selon une des revendications précédentes,
**caractérisé en ce que** les informations d'itinéraire décrivent un itinéraire parcouru par un véhicule, **en ce que** les informations d'itinéraire sont transmises d'un terminal dans le véhicule (13) à la centrale de trafic (14), et **en ce que** des points de trajet (7 ; 12) sont définis là où le véhicule (13) est dévié d'une voie routière.

4. Procédé selon une des revendications précédentes,
**caractérisé en ce qu'**une carte numérique du réseau routier (1 à 6, 7 à 12) est utilisée dans la centrale (14).

5. Procédé selon une des revendications précédentes,
**caractérisé en ce qu'**un programme de calcul d'itinéraire pour calculer un itinéraire pour un véhicule est utilisé dans la centrale.

6. Procédé selon une des revendications précédentes,
**caractérisé en ce qu'**une carte numérique, mémorisée dans un terminal, du réseau routier pour déterminer un itinéraire suivi par le véhicule est utilisée.

7. Procédé selon une des revendications précédentes,
**caractérisé en ce que** la carte numérique dans le terminal et la carte numérique dans la centrale se différencient.

8. Procédé selon une des revendications précédentes,
**caractérisé en ce que** la transmission (15, 16) est effectuée par radio, en particulier radiotéléphonie mobile.

9. Procédé selon une des revendications précédentes,
**caractérisé en ce qu'**un terminal (13) demande de la centrale de trafic (14) une proposition d'itinéraire en indiquant la position actuelle du terminal et la destination souhaitée.

10. Procédé selon une des revendications précédentes,
**caractérisé en ce que** la direction de marche est indiquée comme point cardinal (nord, sud, ouest, est, nord-ouest, etc...).

11. Procédé selon une des revendications précédentes,
**caractérisé en ce que** la direction de marche est indiquée par la géométrie des croisements.

12. Procédé selon une des revendications précédentes,
**caractérisé en ce que** la voie routière (5 ; 6) se trouvant dans la direction de marche de l'itinéraire après le point de trajet (11 ; 12) est indiquée par son nom (rue Beethoven ; rue Bach).

13. Utilisation du procédé selon une des revendications précédentes, dans des régions pour lesquelles un terminal ne possède aucune carte numérique ou aucune carte numérique suffisamment détaillée, en particulier des régions isolées.

14. Centrale de trafic ayant une mémoire, ayant un programme mémorisé dans la mémoire pour la mise en oeuvre de toutes les caractéristiques du procédé selon une des revendications précédentes, un processeur pour traiter le programme, un dispositif de communication pour transmettre (15) des informations d'itinéraire à un terminal et/ou pour recevoir (16) des informations d'itinéraire d'un terminal.

15. Terminal comportant une mémoire, un programme stocké dans la mémoire pour la mise en oeuvre de toutes les caractéristiques du procédé selon une des revendications 1 à 13, comportant un processeur pour traiter le programme, un dispositif de communication pour recevoir (15) ou émettre (16) des informations d'itinéraire.

16. Terminal selon la revendication 15,
**caractérisé en ce qu'**il présente une interface d'utilisateur acoustique et/ou optique.

17. Terminal selon la revendication 15 ou 16,
**caractérisé en ce que** le terminal comporte un compas et/ou une entrée de données pour des données d'un compas.
